# EUROPEAN PATENT APPLICATION

(11) **EP 4 134 711 A1**
(43) Date of publication of application: **15.02.2023**
(21) Application number: 20930397.3
(22) Date of filing: 22.04.2020
(51) Int. Cl.: G01V 3/08

(54) **GEOELECTRICAL PROSPECTING METHOD AND DEVICE FOR THE IMPLEMENTATION THEREOF**

(30) Priority: 09.04.2020 RU 2020113202
(71) Applicant: Obschestvo S Ogranichennoy Otvetstvennostyu "Gelios", g. Irkutsk, 664017 (RU)
(72) Inventor: DAVYDENKO, Yury Aleksandrovich, g. Irkutsk, 664017 (RU); PESTEREV, Ivan Yurievich, g. Irkutsk, 664011 (RU); IAKOVLEV, Sergey Vladimirovich, g. Irkutsk, 664082 (RU); BASHKEEV, Aiur Saianovich, g. Irkutsk, 664005 (RU)
(74) Representative: AWA Sweden AB
(86) International application number: PCT/RU2020/000187
(87) International publication number: WO 2021/206580

(57) **Abstract**

The invention relates to the field of geophysical methods of research in the search and exploration of deposits of hydrocarbons, rare and precious metals, diamonds, when conducting engineering surveys and solving problems of environmental monitoring using digital equipment. The technical result of the invention is to improve the accuracy of predicting the presence of anomalous objects in the environment under study. The geoelectroprospecting device contains a generator unit connected to at least one generator dipole A-B with ground electrodes A and B, and containing an alternating current source, a switch of bipolar pulses and an alternating current rectifier, at least one potential difference recorder with n channels, connected with a receiving dipole M-N containing at least one pair of ground electrodes M and N. The potential difference recorder contains a processing module and a device for collecting primary data and controlling the potential difference recorder with software, moreover, the generator unit and the potential difference recorder are equipped with a satellite time synchronization unit, configured to synchronize the operation of the generator unit and the potential difference recorder. At the same time, the generator dipole A-B is connected in series with one of the channels of the potential difference recorder using a shunt device configured to record the shape of the current pulse, and the receiving dipoles M-N are located equidistant to a given profile within the generator dipole A-B with their coaxial installation relative to generator dipole A-B or with their coaxial and orthogonal installation relative to the generator dipoles Ax-B and Ay-B, respectively.

## Description

### TECHNICAL FIELD

The invention relates to the field of geophysical methods of research in the prospecting and exploration of deposits of hydrocarbons, rare and precious metals, diamonds, when conducting engineering surveys and solving problems of environmental monitoring using digital equipment.

### PRIOR ART

A known method of geoelectrical prospecting and a device for its implementation disclosed in RU 2235347 C1, publ. 08/27/2004. The method of geoelectrical prospecting consists in the fact that along the axis of the observation profile, an electromagnetic field is excited in an investigated medium layer, passing through it a periodic sequence of rectangular current pulses with pauses after each of them using a dipole electric source, and in each period of this sequence, the first an axial difference of electrical potential and the second difference of electrical potential are measured at the observation points.

In this case, the electromagnetic field is excited in turn by two dipole electric sources located on both sides at the same distance from the observation points, and at the end of each current pulse, the instantaneous value of the first axial electrical potential difference is measured, and in each pause between current pulses during the time of this pauses at discrete points with a constant time interval a sequence of instantaneous values of the first axial differences of electrical potentials is measured, simultaneously at the same discrete time points in each pause between current pulses during the time of this pause, the sequence of instantaneous values of the second differences of electrical potentials is measured in a direction perpendicular to the profile axis, three sets of current-independent dipole sources of standard electric parameters are calculated according to the values of the measured electric potential differences. It is possible to solve a mathematical inverse problem and to determine the three electrophysical parameters inherent in each element of the structure: the specific electrical conductivity σο, the induced polarization η and the constant of decay time of the potential difference of the induced polarization τ, and to build three time cut according to these parameters using the values of these standard parameters and the differential equation of mathematical physics for the electric field strength. The device contains two generator units with generator dipoles and a measuring facility with a processing module.

The disadvantage of the known technical solution is the low accuracy of predicting the presence of anomalous objects in the medium under study.

In addition, from the prior art there is a method of geoelectric prospecting and a device for its implementation, disclosed in RU 2574861 C1, publ. 02/10/2016, prototype. A method for measuring and processing transients with a grounded line during pulsed excitation of a field by an electric dipole in order to construct geoelectric sections, consists in the fact that at least one dipole is used to conduct dipole-symmetric electrical profiling (AB-MN) or to measure by the median gradient method (A-MN-B), which transmits rectangular bipolar pulses, the dipoles are combined into a grounded transmission line or lines, which create an electromagnetic field in the area under study, recorded by receiving installations in the transients of this electromagnetic field on switching on and off the current pulses.

In this case, the measurement is carried out by one or several receiving installations simultaneously, using synchronization by a satellite positioning system, to achieve that: transients of the electromagnetic field are measured in time with a frequency of at least 100 kHz and a dynamic range of at least 24 bits, then it recorded in appropriate primary database, that primary database is processed by applying robust regression analysis using the following sequence of actions: suppression of the trend in the primary data from the source, which occurs under the influence of telluric currents and polarization of the electrodes; point removal of outliers (peaks) in the record that have arisen under the influence of thunderstorm activity; the implementation of filtering by the method of low-frequency robust filtering in a two-dimensional sliding window over time delays over the entire time range and the calculation of formation curves with a logarithmic time step over several tens of time delays, obtaining transient curves, and in order to visualize the field material and the possibility of identifying search objects, minimize the influence of the geometric position of the source-receiver on the values of transients at each time delay by calculating the values of transients using the robust regression analysis procedure using the calculated curves of transients from the background section for the same geometry of the receiving installation with the same location of the source-receiver and empirical dependences of the potential difference of the receiving electrodes from the geometry of the installation, after which the apparent electrical resistivity of the measured medium and the frequency dispersion in it are determined, the data obtained are used to construct geoelectric sections by solving direct and inverse problems of geoelectrics. The device contains a generator unit with a generator dipole and a measuring facility with a processing module.

The disadvantage of the above disclosed technical solution is the low accuracy of predicting the presence of anomalous objects in the medium under study.

### DISCLOSURE OF THE INVENTION

The technical result of the invention is to increase the accuracy of predicting the presence of anomalous objects in the medium under study.

The specified technical result is achieved due to the fact that the method of geoelectric prospecting includes the following steps:
a) Location of at least one A-B generator dipole and at least one M-N receiver dipole on the work area according to their arrangement, in which the M-N receiver dipoles are installed in accordance with the coaxial installation towards the generator dipole A-B or in accordance with the coaxial and orthogonal installation towards the generator dipoles Ax-B and Ay-B, respectively;
b) Creation of an electromagnetic field in the area under study by a generator dipole A-B, transmitting rectangular bipolar pulses;
c) Measurement of the current pulse shape of the generator dipole using a shunt device connected to the difference recorder without using a receiving dipole (the receiving dipole is disconnected from the meter), followed by registration of transients from the shunt device;
d) Measurement on the area of work according to the layout of the receiving dipole M-N and the generator dipole A-B of transients to turn on and off the current pulses of the created electromagnetic field by at least one potential difference recorder with n channels using the receiving dipole M-N, which is coaxially installed towards the generator dipole A-B;
e) Recording the transient data obtained in steps c) and d);
f) Processing of the primary database using robust regression analysis;
g) Determination of the apparent electrical resistivity of the measured medium and the frequency dispersion in it, and the obtained data are used to construct geoelectric sections by solving the inverse problem of geoelectrics.

In the case of using generator dipoles Ax-B and Ay-B, between steps e) and f) the following consecutive steps are carried out:
a) Switching the generator dipole AxB to the generator dipole Ay-B;
b) Creation of an electromagnetic field on the area under study by a generator dipole AyB, transmitting rectangular bipolar pulses;
c) Measurement on the work area according to the layout of the receiving dipole M-N and the generator dipoles Ax-B and Ay-B of transients for turning on and off the current pulses of the created electromagnetic field by at least two potential difference recorders with n channels using the receiving dipole M-N, which orthogonally installed towards the generator dipole Ay-B;
d) Measurement of the shape of the current pulse of the generator dipole Ay-B using a shunt device connected to the difference recorder without a receiving dipole, followed by registration of transients from the shunt device;
e) Recording the transient data obtained in steps c) and d).

The specified technical result is also achieved due to the fact that the geoelectroprospecting device contains a generator unit connected to at least one generator dipole A-B with ground electrodes A and B, and containing an alternating current source, a switch of bipolar pulses and an alternating current rectifier, at least one potential difference recorder with n channels connected to an M-N receiving dipole containing at least one pair of ground electrodes M and N. The potential difference recorder contains a processing module and a device for collecting primary data and controlling the potential difference recorder with software, moreover, the generator unit and the potential difference recorder are equipped with a satellite time synchronization unit which is capable to synchronize the operation of the generator unit and the potential difference recorder. At the same time, the generator dipole A-B is connected in series with one of the channels of the potential difference recorder using a shunt device which is capable to record the shape of the current pulse, and the receiving dipoles M-N are located equidistantly to a given profile within the generator dipole A-B with their coaxial installation relative to generator dipole A-B or with their coaxial and orthogonal installation relative to the generator dipoles Ax-B and Ay-B, respectively.

### BRIEF DESCRIPTION OF THE DRAWINGS

The invention will be better understood from the description, which is not restrictive and given with reference to the accompanying drawings, which show:

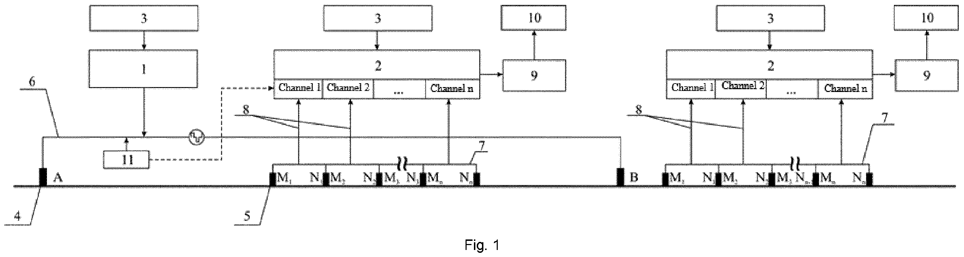

Fig. 1 - block diagram of the claimed device (hardware-software electrical prospecting complex).
Fig. 2 - layout of the generator dipoles Ax-B and Ay-B and the receiving dipole MN for conducting areal work by electromagnetic sounding and induced polarization (EMS-IP) coaxial and orthogonal installations.
Fig. 3 - layout of the generator dipole A-B and the receiving dipole MN for carrying out profile work using the EMS-IP method by a dipole installation.
Fig. 4 - block diagram of the processing module.
Fig. 5 - map of apparent resistivity: a) for coaxial installation; b) for orthogonal installation.

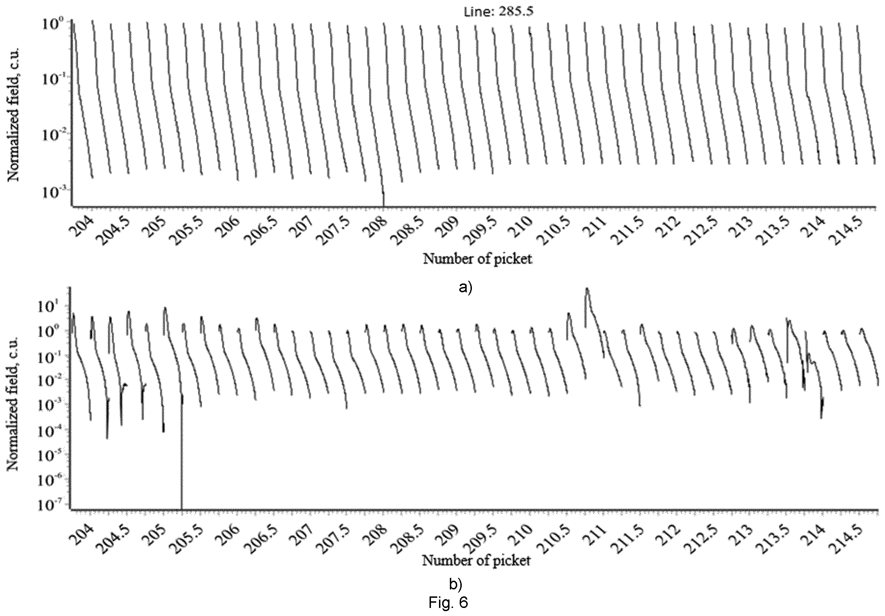

Fig. 6 - schedule of standard sounding curves: a) for a coaxial installation; b) for orthogonal installation.

1 - generator unit; 2 - potential difference recorder (meter) with n channels; 3 - satellite time synchronization unit; 4 - ground electrodes A and B; 5 - ground electrodes M and N; 6 - generator dipole A-B (feeding dipole, feed line); 6.1 - generator dipole Ax-B; 6.2 - generator dipole Ay-B; 7 - receiving dipole M-N (receiving electrical streamer, receiving line); 8 - wire connecting the receiving dipoles M-N and the meter; 9 - device for collecting primary data and controlling the potential difference recorder; 10 - software (software) for controlling the meter and storing primary data, installed on the device for collecting primary data and controlling the potential difference recorder; 11 - shunt device; 12 - key switching generator dipoles AXB and AYB; 13-26 - designed profiles; 27 - geoinformation unit for planning field work; 28 - file database storage unit; 29 - unit of primary data processing; 30 - database conversion unit; 31 - unit for assessing the quality of the results of processing and inversion; 32 - unit of multidimensional statistical analysis; 33 - one-dimensional inversion block; 34 - 3D inversion block.

### IMPLEMENTATION OF THE INVENTION

The geoelectroprospecting device contains a generator unit (1) connected to at least one generator dipole A-B (6) with grounding electrodes A and B made of iron, and containing an alternating current source, a switch of bipolar pulses and an alternating current rectifier, at least one potential difference recorder (2) with n channels, connected to the receiving dipole M-N (7), containing at least one pair of ground electrodes (4) M and N, made of low-polarizing metal (copper, brass). The recorder (2) of the potential difference contains a device (9) for collecting primary data and controlling the recorder (2) of the potential difference with software (10) for controlling the meter and storing the primary data, moreover, the generator unit and potential difference recorder (2) are equipped with a satellite time synchronization unit (3), made with the possibility of synchronizing the operation of the generator unit and the potential difference recorder (2). In this case, the generator dipole A-B (6) is connected in series with one of the channels of potential difference recorder (2) using a shunt device (11) which is capable to record the shape of the current pulse, and the receiving dipoles M-N (7) are located equidistantly to the given profile within the generator dipole A-B (6) when they are installed coaxially towards the generator dipole A-B (6) or when they are coaxial and orthogonal towards the generator dipoles Ax-B (6.1) and Ay-B (6.2), respectively.

The control of the generator unit (1), the shunt device (11) and the potential difference recorder (2) is carried out using the device (9) for collecting primary data and controlling the potential difference recorder with software (10) for controlling the meter and storing primary data. The device (9) for collecting primary data and controlling the potential difference recorder is connected to the meter via a wired or wireless connection, for example, Wi-Fi, the generator unit (1) and the shunt device (11) are controlled through the satellite time synchronization unit (3).

A geoelectric prospecting method using a geoelectric prospecting device is carried out in accordance with two ways of implementation of the invention.

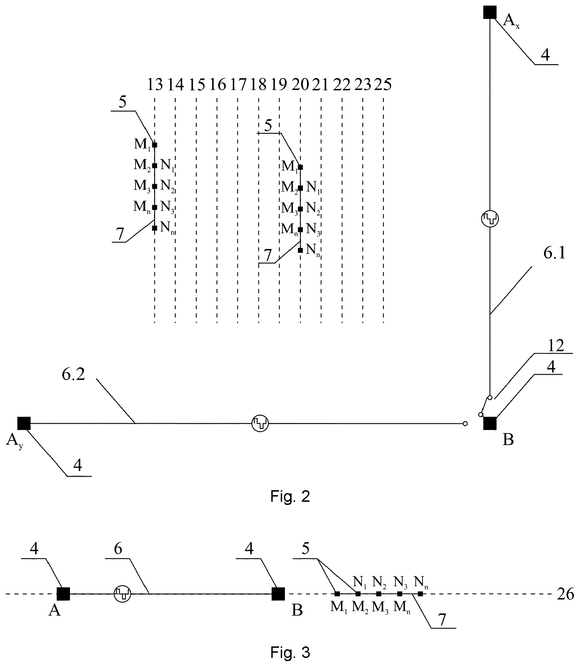

In accordance with the first embodiment of the invention, the method of geoelectric exploration is carried out using a coaxial installation of the receiving dipole M-N (7) towards the generator dipole A-B (6) with one profile (profile work). In accordance with the first embodiment of the invention (Fig. 3), a coaxial installation means the location of the receiving dipoles M-N (7) parallel to the generator dipole A-B (6), while the receiving dipoles M-N (7) are located on the axis of the generator dipole A-B (6).

In accordance with the first embodiment of the invention, the method of geoelectrical prospecting includes the following steps.

At the first stage, the generator dipole A-B (6) is located on the work area, which is connected by cable to the generator unit (1), consisting of a rectifier, a switch of bipolar pulses, and can be powered from a current source of 12, 220 or 380 V (depending on the switch used), and the receiving dipole M-N (7), which is connected using a wire (8) to a potential difference recorder (2) with n channels (4 or 8 channels). The generator dipole A-B (6) and the receiving dipole M-N are installed according to their arrangement (Fig. 3), in which the receiving dipoles M-N (7) are installed in accordance with the coaxial installation relative to the generator dipole A-B (6) and are located on its axes. In the case of using more than one receiving dipole M-N (7), each of which is connected using a wire (8) to the corresponding potential difference recorder (2), for example, when using two receiving dipoles M-N (7), they are installed in series according to the designed profile ( 26) in such a way that the receiving dipole M-N (7) of the first the potential difference recorder (2) and the receiving dipole M-N (7) of the second the potential difference recorder (2) are installed parallel to the generator dipole A-B (6) and are located in series on the axis of the generator dipole A-B (6). At the same time, the geoinformation unit (27) for planning field work of the processing module of the potential difference recorder (2) creates a geo-information project in a user GIS program (for example, QGIS) with a work site. According to the geological (or technical) task, the location of the generator dipole and profile (26) is designed in such a way as to minimize the number of generator dipoles A-B (6), since the movement of multi-kilometer generator dipoles A-B (6) is a labor-intensive operation. The designed location of the generator dipoles A-B (6) and the profile (26) is uploaded to satellite navigators, on which further work will be carried out.

Next, an electromagnetic field is created on the area under study within one profile (26) by a generator dipole A-B (6), which transmits rectangular bipolar pulses with a pause with a given pulse length and pauses. The generator dipole A-B (6) transmits pulses through the ground electrodes (4) A and B into the geological environment (earth). These impulses, passing through the geological environment, change under the influence of the medium properties.

Then, the shape of the current pulse of the generator dipole A-B (6) is measured using a shunt device (11) connected to the difference recorder (2) without using the receiving dipole M-N (7), followed by recording and storing transient data from the shunt device (11) to the unit (28) for storing the file database of the processing module of the potential difference recorder (2).

Then, on the work area, according to the layout of the generator dipole A-B (6) and the receiving dipole M-N (7) in accordance with the first embodiment of the invention, based on the electromagnetic field created by the generator dipole A-B (6) by at using the receiving dipole M-N (7), transients are measured to turn on and off the current pulses of the created electromagnetic field, while the receiving dipole M-N (7) is installed coaxially with respect to the generator dipole A-B, and the transients of the created electromagnetic field are measured in time by the potential difference recorder (2) with a frequency of at least 100 kHz and a dynamic range of at least 18 bits. If there is more than one receiving dipole M-N (7), transients are recorded in each the potential difference recorder (2), which is connected with a wire (8) to the corresponding receiving dipole M-N (7). Data recording of transients from the electromagnetic field, registered by the receiving dipole M-N (7) is carried out in the unit (28) for storing the file database of the processing module of the potential difference recorder (2).

The recording of primary data (transients registered by the shunt device and the receiving dipole) in the file database storage unit (28) is carried out in a structured file (Primary Data File DB) developed on the basis of the PCM Wave format. PCM (pulse code modulation) - a method of encoding analog signals for transmission over a digital channel by sampling the analog signal at a regular interval. Wave (Wave audio format) is a container format for storing uncompressed PCM audio. This format has been adapted for storing primary EMS-IP data and is called GDF (Gelios data file).

Then, the primary database is processed in the primary data processing unit (29) using robust regression analysis, using the following sequence of actions:
1. Removing corrupted implementations from accumulations. (Transients are recorded with data accumulation. Two transients (positive and negative) are one realization). Using the median of absolute scores, standard deviation, or median, a score is calculated for each realization. Implementations which estimate falls outside the user-specified confidence interval are removed. As a result, the point removal of outliers (peaks) in the record that have arisen under the influence of various external influences (thunderstorm, mechanical impact on the stream / electrode) is carried out.
2. Suppression of industrial noise. The procedure for suppressing industrial noise (50 Hz and harmonics) is implemented on the basis of a differentiating filter with an integrated smoothing function in a sliding window.
3. Elimination of the trend arising under the influence of telluric currents and electrode polarization. To eliminate the trend that occurs due to the change during the recording of the potentials at the receiving electrodes, a value is calculated for each recorded transient to enter a compensating value to bring all the recorded data to one zero level.
4. Smoothing (robust filtering) with a two-dimensional sliding window. Smoothing transients in a two-dimensional sliding window using Hampel's M-estimator eliminates outliers.
5. Integration (robust averaging) into the sounding curve. The final step of primary processing is the procedure of integrating data into time windows, which makes it possible to significantly compress the amount of information occupied in comparison with the primary data and, at the same time, increase the signal-to-noise ratio. For each time window, an M-score is calculated using the Hampel function in a two-dimensional window. The procedure is similar to the smoothing procedure with a two-dimensional sliding window, except that in the integration procedure the window width is equal to the entire range of accumulations. Integration is performed over a pre-calculated grid of time windows with a logarithmic step.

As a result, the processing of the primary database using the primary data processing unit (29) calculates the sounding curves.

Then the sounding curves enter the conversion unit (30) for the database, where, in accordance with the data on the spatial location of the geoelectroprospecting device, which were registered by the geoinformation unit (27), they are converted into the MarsDB database format for further work.

Next, the sounding curves enter the unit (31) for assessing the quality of the results of processing and inversion, where the quality of the obtained probing curves is assessed. If the quality satisfies the requirements, then the data is transferred to the unit (32) of multidimensional statistical analysis and/or to the unit (33) of the one-dimensional inversion block. Unit (32) is designed for multidimensional statistical analysis, allows you to highlight anomalies in the sounding curves without using inversion, which allows you to estimate the location of the desired objects. Unit (33) is equipped with a program for automatic and semi-automatic one-dimensional inversion of electromagnetic sounding data within the framework of a one-dimensional model, taking into account the frequency dispersion of electrical conductivity. After obtaining one-dimensional models, the data is transmitted through unit (31) with the product of the inversion quality estimate to block (34) of three-dimensional inversion.

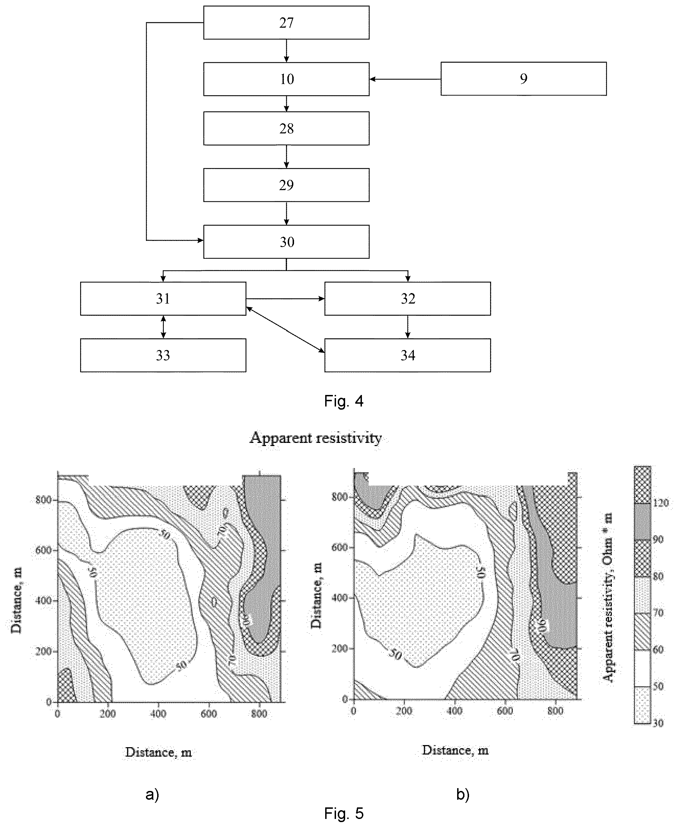

Block (34) provides the solution of direct and inverse three-dimensional problems with the restoration of the three-dimensional distribution of the initial polarization parameter and the correction of the time parameter of the decay function for a fixed geometry of the medium (layers and three-dimensional objects). Computing modules are based on a mathematical apparatus based on the finite element method. Modeling of induction processes and processes of induced polarization in the time domain is performed on the basis of finite-difference approximations of time derivatives. All computational schemes for calculating three-dimensional fields use the technology of selecting a source field in a horizontally layered medium. As a result of using the Cole-Cole model using the parameters: electrical resistivity, stationary polarization, relaxation time, exponent, layer thickness and spatial parameters of the width and length of the object, a geological section is built (Fig. 5b) for the first embodiment of the invention.

Then, the generator dipole A-B (6) and the receiver dipole M-N (7) are set in a new location along the profile (27) and the above steps of the method according to the first embodiment of the invention are repeated.

According to a second embodiment of the invention, a geoelectric exploration method comprising the following steps.

At the first stage, two generator dipoles Ax-B (6.1) and Ay-B (6.2) are located on the work area, which are connected by cable to the generator unit (1), consisting of a rectifier, a switch of bipolar pulses, and can be powered from current source 12, 220 or 380 V (depending on the switch used), and at least two receiving dipoles M-N (7), each of which is connected by means of a wire (8) to the corresponding potential difference recorder (2) with n channels (4 or 8 channels). The generator dipoles Ax-B (6.1) and Ay-B (6.2) and the receiving dipoles M-N (7) are installed according to their arrangement (Fig. 2), in which the receiving dipoles M-N (7) are installed in accordance with the coaxial installation relative to the generator dipole Ax-B (6.1), according to which the receiving dipoles M-N (7) are installed parallel to the generator dipole Ax-B (6.1) and are located within the generator dipole Ax-B (6.1), and also the receiving dipoles M-N (7) are installed in accordance with the orthogonal installation relative to the generator dipole Ay-B (6.2), in which the receiving dipoles M-N (7) are set perpendicular to the generator dipole Ay-B (6.2) and are located within the generator dipole AyB (6.2). Each receiving dipole M-N (7) is installed on its corresponding designed profile (1-25). At the same time, the geoinformation block (27) for planning field work of the processing module of the recorder (2) of the potential difference creates a geo-information project in a user GIS program (for example, QGIS) with a work site. According to the geological (or technical) assignment, the location of the generator dipoles Ax-B (6.1) and Ay-B (6.2) and profiles (1-25) is designed in such a way as to minimize the number of generator dipoles Ax-B (6.1) and Ay-B (6.2), since the movement of multi-kilometer generator dipoles is a labor-intensive operation. The designed location of the A-B generator dipoles and profiles is uploaded to satellite navigators, which will be used for further work.

Next, an electromagnetic field is created on the area under study within the profiles (12) by the generator dipole Ax-B (6.1), which transmits rectangular bipolar pulses with a pause with a given pulse length and pauses. The generator dipole Ax-B (6.1) transmits pulses through the grounding electrodes (4) Ax and B into the geological environment (earth). These pulses, passing through the geological environment, change under the influence of the medium properties.

Then, the shape of the current pulse of the generator dipole Ax-B (6.1) is measured using a shunt device (11) connected to the difference recorder without using the receiving dipole M-N (7), followed by recording and storing transient data from the shunt device (11) in unit (28) for storing the file database of the processing module of the recorder (2) of the potential difference.

After that, on the work area, according to the layout of the generator dipoles Ax-B (6.1) and Ay-B (6.2) and the receiving dipoles M-N (7) in accordance with the second embodiment of the invention, the created electromagnetic field of the generator dipole Ax-B (6.1) by the potential differences recorder (2) using the receiving dipole M-N (7) measure transients to turn on and off the current pulses of the created electromagnetic field, while the receiving dipole M-N (7) is installed coaxially with respect to the generator dipole Ax-B (6.1), and the measurement of transients of the created electromagnetic field is carried out in time by the potential difference recorder (2) with a frequency of at least 100 kHz and a dynamic range of at least 18 bits. In this case, the transients are recorded in each recorder (2) of the potential difference, which is connected by means of a wire (8) to the corresponding receiving dipole M-N (7). Data recording of transients from the electromagnetic field, registered by the receiving dipole M-N (7) is carried out in the unit (28) for storing the file database of the processing module of the recorder (2) of the potential difference.

Next, the switch of bipolar pulses is turned off and the key (12) switches the generator dipole Ax-B to the generator dipole Ay-B.

Next, an electromagnetic field is created on the area under study within the profiles (1-25) by the Ay-B generator dipole (6.2), which transmits rectangular bipolar pulses with a pause with a given pulse length and pauses. The generator dipole Ay-B (6.2) transmits pulses through the grounding electrodes (4) Ay and B into the geological environment (earth). These pulses, passing through the geological environment, change under the influence of the medium properties.

After that, on the work area, according to the layout of the generator dipoles Ax-B (6.1) and Ay-B (6.2) and the receiving dipoles M-N (7) in accordance with the second embodiment of the invention, based on the created electromagnetic field, the generator dipoles Ay-B (6.2) the potential difference recorder (2) using the receiving dipole M-N (7) measures the transients for turning on and off the current pulses of the created electromagnetic field, while the receiving dipole M-N (7) is coaxially installed relative to the generator dipole Ay-B (6.2), while the transients of the generated electromagnetic field are measured in time by a potential difference recorder (2) with a frequency of at least 100 kHz and a dynamic range of at least 18 bits. In this case, the transients are recorded in each recorder (2) of the potential difference, which is connected by means of a wire (8) to the corresponding receiving dipole M-N (7). Data recording of transients from the electromagnetic field, registered by the receiving dipole M-N (7) is carried out in the unit (28) for storing the file database of the processing module of the recorder (2) of the potential difference.

Then, the shape of the current pulse of the generator dipole Ay-B (6.2) is measured using a shunt device (11) connected to the difference recorder without using the receiving dipole M-N (7), followed by recording and storing transient data from the shunt device (11) in unit (28) for storing the file database of the processing module of the recorder (2) of the potential difference.

The recording of primary data (transients registered by the shunt device and receiving dipoles from the created electromagnetic field by the generator dipoles Ax-B (6.1) and Ay-B (6.2)) in the file database storage unit (28) is kept in a structured file (File DB of primary data) based on the PCM Wave format. PCM (pulse code modulation) - pulse code modulation - a method of encoding analog signals for transmission over a digital channel by sampling the analog signal at a regular interval. Wave (Wave audio format) is a container format for storing uncompressed PCM audio. This format has been adapted for storing primary EMS-IP data and is called GDF (Gelios data file).

Then the generator dipoles Ax-B (6.1) and Ay-B (6.2) and the receiving dipole M-N (7) are set in a new location along the profiles (1-25) and the above described steps of the method in accordance with the second embodiment of the invention are repeated.

Then, the primary data array is processed in the primary data processing unit (29) using robust regression analysis, using the following sequence of actions:
1. Removing corrupted implementations from accumulations. Using the median of absolute deviations, standard deviation or median for each implementation, a score is calculated. Implementations which estimate falls outside the user-specified confidence interval are removed. As a result, the point removal of outliers (peaks) in the record that have arisen under the influence of various external influences (thunderstorm, mechanical impact on the stream / electrode) is carried out.
2. Suppression of industrial noise. The procedure for suppressing industrial noise (50 Hz and harmonics) is implemented on the basis of a differentiating filter with an integrated smoothing function in a sliding window.
3. Elimination of the trend arising under the influence of telluric currents and electrode polarization. To eliminate the trend that occurs due to the change during the recording of the potentials at the receiving electrodes, a value is calculated for each recorded transient to enter a compensating value to bring all the recorded data to one zero level.
4. Smoothing (robust filtering) with a two-dimensional sliding window. Smoothing transients in a two-dimensional sliding window using Hampel's M-estimator makes it possible to eliminate outliers.
5. Integration (robust averaging) into the sounding curve. The final step of primary processing is the procedure of integrating data into time windows, which makes it possible to significantly compress the amount of information occupied in comparison with the primary data and, at the same time, increase the signal-to-noise ratio. For each time window, an M-score is calculated using the Hampel function in a two-dimensional window. The procedure is similar to the smoothing procedure with a two-dimensional sliding window, except that in the integration procedure the window width is equal to the entire range of accumulations. Integration is performed over a pre-calculated grid of time windows with a logarithmic step.

As a result, the processing of the primary data array using the primary data processing unit (29) calculates the sounding curves.

Then the sounding curves enter the conversion block (30) for the database, where, in accordance with the data on the spatial location of the geoelectroprospecting device, which were registered by the geoinformation unit (27), they are converted into the MarsDB database format for further work.

Next, the sounding curves enter the unit (31) for assessing the quality of the results of processing and inversion, where the quality of the obtained sounding curves is assessed. If the quality satisfies the requirements, then the data is transferred to the unit (32) of the multidimensional statistical analysis and/or to the unit (33) of the one-dimensional inversion block. Unit (32) is designed for multidimensional statistical analysis, allows you to highlight anomalies in the sounding curves without using inversion, which allows you to estimate the location of the desired objects. Unit (33) is equipped with a program for automatic and semi-automatic one-dimensional inversion of electromagnetic sounding data within the framework of a one-dimensional model, taking into account the frequency dispersion of electrical conductivity. After obtaining one-dimensional models, the data is transmitted through unit (31) with the product of the inversion quality estimate to block (34) of three-dimensional inversion.

Block (34) provides the solution of direct and inverse three-dimensional problems with the restoration of the three-dimensional distribution of the initial polarization parameter and the correction of the time parameter of the decay function for a fixed geometry of the medium (layers and three-dimensional objects). Computing modules are based on a mathematical apparatus based on the finite element method. Modeling of induction processes and processes of induced polarization in the time domain is performed on the basis of finite-difference approximations of time derivatives. All computational schemes for calculating three-dimensional fields use the technology of selecting a source field in a horizontally layered medium. As a result of using the Cole-Cole model using the parameters: electrical resistivity, stationary polarization, relaxation time, exponent, layer thickness and spatial parameters of the width and length of the object, a geological section is built (Fig. 5b) for the first embodiment of the invention.

The use of a shunt device (11) makes it possible to achieve the claimed technical result due to the fact that the real form of turning off the current pulse is recorded in order to subsequently take this form into account when solving the direct problem, since the shape of the transient curve at early times depends on the shape of the current pulse decay - in the first tens of microseconds. As a result of more accurate modeling of the curve, an increase in resolution is achieved in the upper part of the section, which makes it possible to more accurately localize the position of ore bodies, the boundaries of the weathering crust, the position of aquifers and other anomalous objects. In addition, due to a more accurate selection of model and observed curves at early decay times of the curve of formation, the values of electrical resistivity and polarization parameters of the host medium and anomalous objects are determined more reliably, without a systematic shift caused by underestimation of the real shape of the current pulse when calculating the direct problem for a nonstationary electromagnetic field. A similar approach is widely used in air-electrical exploration, where recording and taking into account the real shape of the current pulse in the direct problem makes it possible to more accurately subdivide the upper part of the section.

The use of an orthogonal installation in addition to the coaxial installation makes it possible to achieve the claimed technical result due to the fact that the orthogonal component of the electromagnetic field has a high sensitivity to lateral inhomogeneities of the section, such as kimberlite pipes, dikes, stockworks, faults, etc. Often, the geological task is to identify such objects, and in this case, the use of an orthogonal setup allows, already at the stage of visualization of the observed curves, to localize anomalous zones that are promising for detecting search objects in them. At the stage of joint three-dimensional inversion of nonstationary electromagnetic fields, performed simultaneously for coaxial and orthogonal installations, due to the use of an additional electromagnetic field source, the uncertainty is reduced, since the found solution must satisfy two sets of sounding curves obtained from coaxial and orthogonal installations.

The invention has been described above with reference to a specific embodiment. For specialists, other embodiments of the invention may be obvious, without changing its essence, as it is disclosed in the present description. Accordingly, the invention is to be considered limited in scope by the following claims only.

## Claims

1. A method of geoelectrical prospecting, including the following steps:
a) Location of at least one A-B generator dipole and at least one M-N receiver dipole on the work area according to their arrangement, in which the M-N receiver dipoles are installed in accordance with the coaxial installation towards the generator dipole A-B or in accordance with the coaxial and orthogonal installation towards the generator dipoles Ax-B and Ay-B, respectively;
b) Creation of an electromagnetic field in the area under study by a generator dipole A-B, transmitting rectangular bipolar pulses;
c) Measurement of the current pulse shape of the generator dipole using a shunt device connected to the difference recorder without using a receiving dipole (the receiving dipole is disconnected from the meter), followed by registration of transients from the shunt device;
d) Measurement on the area of work according to the layout of the receiving dipole M-N and the generator dipole A-B of transients to turn on and off the current pulses of the created electromagnetic field by at least one potential difference recorder with n channels using the receiving dipole M-N, which is coaxially installed towards the generator dipole A-B;
e) Recording the transient data obtained in steps c) and d);
f) Processing of the primary database using robust regression analysis;
g) Determination of the apparent electrical resistivity of the measured medium and the frequency dispersion in it, and the obtained data are used to construct geoelectric sections by solving the inverse problem of geoelectrics.

2. The method according to claim 1, wherein in the case of using generator dipoles Ax-B and Ay-B, between steps e) and f) the following successive steps are carried out:
a) Switching the generator dipole AxB to the generator dipole Ay-B;
b) Creation of an electromagnetic field on the area under study by a generator dipole AyB, transmitting rectangular bipolar pulses;
c) Measurement on the work area according to the layout of the receiving dipole M-N and the generator dipoles Ax-B and Ay-B of transients for turning on and off the current pulses of the created electromagnetic field by at least two potential difference recorders with n channels using the receiving dipole M-N, which orthogonally installed towards the generator dipole Ay-B;
d) Measurement of the shape of the current pulse of the generator dipole Ay-B using a shunt device connected to the difference recorder without a receiving dipole, followed by registration of transients from the shunt device;
e) Recording the transient data obtained in steps c) and d).

3. A geoelectroprospecting device containing a generator unit connected to at least one generator dipole A-B with ground electrodes A and B, and containing an alternating current source, a switch of bipolar pulses and an alternating current rectifier, at least one potential difference recorder with n channels, connected to the receiving dipole M-N, containing at least one pair of ground electrodes M and N, and containing a processing module and a device for collecting primary data and controlling the potential difference recorder with software, moreover, the generator unit and the potential difference recorder are equipped with a satellite time synchronization unit, made with the possibility of synchronizing the operation of the generator unit and the potential difference recorder, while the generator dipole is connected in series with one of the channels of the potential difference recorder using a shunt device, made with the possibility of registering the shape of the current pulse and the receiving dipoles M-N are located equidistant to a given profile within the generator dipole A-B when they are coaxially installed relative to the supply dipole A-B or when they are coaxially and orthogonally installed relative to the generator dipoles Ax-B and Ay-B, respectively.
